# EUROPÄISCHE PATENTANMELDUNG

(11) **EP 1 005 974 A1**
(43) Veröffentlichungstag der Anmeldung: **07.06.2000**
(21) Anmeldenummer: 99120654.1
(22) Anmeldetag: 19.10.1999
(51) Int. Cl.: B29C 47/82, B29C 45/74, H05B 3/58

(54) **Vorrichtung zum Heizen und Kühlen von Maschinenzylindern zur Kunststoffverarbeitung**

(30) Priorität: 01.12.1998 DE 19855357
(71) Anmelder: Wema Beheizungstechnik GmbH, 58515 Lüdenscheid (DE)
(72) Erfinder: Michels, Robert, 57368 Lennestadt (DE)
(74) Vertreter: Hassler, Werner, Dr.

(57) **Zusammenfassung**

Eine Vorrichtung zum Heizen und Kühlen von Maschinenzylindern zur Kunststoffverarbeitung, wobei zu Ringbändern zusammengefügte Keramiksteine (1) auf dem Maschinenzylindermantel aufliegend angeordnet sind, wobei in Umfangsrichtung miteinander fluchtende Kanäle (2) der Keramiksteine (1) Heizbänder aufnehmen und wobei ein Zylindermantel die Keramiksteine (1) umgreift und Kühlkanäle umschließt. Das technische Problem ist eine solche Ausbildung der Vorrichtung, daß sowohl eine wirksame Heizung als auch eine effiziente Kühlung des Maschinenzylinders durch ein einfach aufgebautes, nur aus Keramiksteinen besthenden Gliederband sichergestellt werden kann. Die Keramik der Keramiksteine hat eine Wärmebeständigkeit von mehr als 200°C, einen spezifischen Durchgangswiderstand von mehr als 10⁶ Ωcm und eine Wärmeleitfähigkeit größer als 10W/mK, und auf der von dem Maschinenzylindermantel abgewandten Seite der Keramiksteine sind in den Kühlkanal hineinragende Vorsprünge (3) angeordnet.

## Beschreibung

Die Erfindung betrifft eine Vorrichtung zum Heizen und Kühlen von Maschinenzylindern zur Kunststoffverarbeitung, wobei zu Ringbändern zusammengefügte Keramiksteine auf dem Maschinenzylindermantel aufliegend angeordnet sind, wobei in Umfangsrichtung miteinander fluchtende Kanäle der Keramiksteine Heizbänder aufnehmen und wobei ein Zylindermantel die Keramiksteine umgreift und Kühlkanäle umschließt.

Anwendungsgebiet der Erfindung ist die Beheizung und Kühlung von Maschinenzylindern, wie Plastifizierzylindern, Einspritzzylindern an Spritzgießmaschinen und Extrudern für Kunststoffe.

Plastifizierzylinder von Kunststoffverarbeitungsmaschinen müssen beheizt und gekühlt werden. Im Einzelnen ist während der Anfahrperiode eine Beheizung des Plastifizierzylinders notwendig. Im Betrieb ist je nach Betriebspunkt und verarbeitetem Kunststoff eine Beheizung oder Kühlung erforderlich. Die Heizvorrichtungen und Kühlvorrichtungen sind in Richtung der Zylinderachse in Abschnitte unterteilt, um die Wärmezufuhr oder Wärmeabfuhr abschnittweise beeinflussen zu können. Ein modularer Aufbau der Vorrichtung aus Keramiksteinen ermöglicht eine Anpassung an unterschiedliche Durchmesser des Maschinenzylinders, wie der nachstehend beschriebene Stand der Technik zeigt.

Bei der Heiz-Kühlvorrichtung nach der EP 0 246 250 B1 sind ringförmige Heizbünder mit U-förmig gebogenen Metalllamellen kombiniert, deren Steg unter den Heizbändem verläuft. Die Metalllamellen vergrößern die von der Kühlluft umströmte Oberfläche und erhöhen die Wärmeabfuhr aus dem Anlagebereich zwischen den Heizbändern und dem Zylinder, so daß eine größere Kühlleistung erzielt wird.

Die DE 297 04 182 U1 oder EP 0 862 981 A1 beschreibt eine Heiz-Kühlvorrichtung, bei der sich überlappende, halbkreisförmig gebogene Aluminiumschalen mit ringförmigen Heizbändern auf den Extruderzylinder gespannt sind. Die Aluminiumschalen weisen in den Bereichen zwischen den Heizbändern Kühlstege auf. Die Kühlstege dienen zur Vergrößerung der von der Kühlluft umströmten Oberfläche, und die Aluminiumschalen ermöglichen eine Wärmeabführ aus dem Bereich zwischen Heizbandunterseite und Zylinderobefläche.

Der Aufbau dieser Heiz-Kühlvorrichtungen aus mehreren Elementen ist sehr aufwendig. Die Kühlelemente zwischen den Heizbändern und dem Zylinder bedingen zusätzliche Trennflächen, die den Wärmeübergang in der Heizphase behindern. Die verwendeten Metalle Kupfer, Messing und Aluminium besitzen keine für alle Anwendungsfälle ausreichende Wärmebeständigkeit, so daß durch Verzundern oder Anschmelzen Ausfälle möglich sind.

Die EP 0 122 886 bzw. AT E 47 084 B beschreiben eine Vorrichtung, deren in Ringbändern angeordnete Keramiksteine neben den Kanälen für die Heizbändern auch in Umfangsrichtung verlaufende Kanäle für Kühlluft aufweisen, so daß dadurch der kompakte Aufbau der Keramiksteine gestört wird. Die Kanäle für Kühlluft innerhalb der Keramiksteine sind für eine schnelle Übertragung der Heizleistung auf den Maschinenzylindermantel nachteilig.

Bei der Vorrichtung nach der EP 0 122 887 B1 bzw. der AT E 47 085 B haben die Keramiksteine jeweils ebene Flächen in Anlage an den Maschinenzylindermantel und auf der Rückseite. Die Rückseite wird von Kühlluft umströmt, die auch in Kammern zwischen den Keramiksteinen einströmt. Die Keramiksteine haben eine ungenügende Wärmeleitfähigkeit, so daß die Kühlleistung dieser Vorrichtung unzureichend ist.

Bei der gattungsgemäßen Vorrichtung nach der EP 0 248 769 B1 bzw. DE 37 83 953 T2 haben die Keramiksteine auf der Kontaktseite zu dem Maschinenzylindermantel offene Umfangsrinnen, durch die Kühlluft strömen kann. Auf der Rückseite der Keramiksteine sind Kühlrippen angeordnet. Die Umfangsrinnen mindern die Kontaktfläche zum Maschinenzylindermantel, so daß die Wärmeübertragung zum Maschinenzylindermantel beeinträchtigt wird.

Aufgabe der Erfindung ist eine solche Ausbildung der Vorrichtung, daß sowohl eine wirksame Heizung als auch eine effiziente Kühlung des Maschinenzylinders durch ein einfach aufgebautes, nur aus Keramiksteinen besthenden Gliederband sichergestellt werden kann.

Diese Aufgabe wird nach der Erfindung dadurch gelöst, daß die Keramik der Keramiksteine eine Wärmebeständigkeit von mehr als 200 °C, einen spezifischen Durchgangswiderstand von mehr als 10⁶ Ωcm und eine Wärmeleitfähigkeit größer als 10 W/mK hat und daß auf der von dem Maschinenzylindermantel abgewandten Seite der Keramiksteine in den Kühlkanal hineinragende Vorsprünge angeordnet sind.

Durch die Materialauswahl und die spezielle Formgebung der Keramiksteine ist die Heiz- und Kühlfunktion sicherstellt. Dazu besitzt die Keramik der Keramiksteine eine Wärmebeständigkeit von mehr als 200 °C, einen spezifischen Durchgangswiderstand von mehr als 10⁶ Ωcm und eine Wärmeleitfähigkeit größer als 10 W/mK. Zur Wärmeabgabe an die Kühlluft sind auf der von dem Maschinenzylindermantel abgewandten Seite der Keramiksteine in den Kühlkanal hineinragende Vorsprünge angeordnet.

Die hohe Wärmeleitfähigkeit der Keramiksteine gewährleistet eine sichere Wärmeabfuhr auf der Kopfseite. Der Querschnitt der Keramiksteine im Bereich des Maschinenzylindermantels sind nicht verringert, so daß ein guter Wärmeübergang in der Heizphase und der Kühlphase sichergestellt ist. Die hohe Wärmebestündigkeit sichert eine lange Lebensdauer der Keramiksteine. Der spezifische Durchgangswiderstand sichert einen hohen Isolationswert. Auf der Kopfseite ragen Vorsprünge in einen Kühlkanal mit großem Querschnitt hinein.

In der Heizphase ist eine sichere Isolierung zwischen dem Maschinenzylinder und den stromdurchflossenen Heizdrähten in den Bohrungen der Keramiksteine gewährleistet. Jedoch ist zwischen dem Maschinenzylinder und den Keramiksteinen ein direkter Wärmekontakt vorhanden.

In der Kühlphase ermögllicht die gute Wärmeleitfähigkeit der Keramik in Zusammenwirkung mit der Formgebung der Keramiksteine eine gute Wärmeabgabe vom Maschinenzylinder an die Kühlluft.

Keramika mit der gewünschten hohen Wärmeleitfähigkeit sind Aluminiumoxid (Al₂O₃) , Aluminiumnitrid (AlN), Aluminumtitanat (Al₂O₃TiO₂) und/oder Siliciumnitrid (SN).

Eine optimale Kühlwirkung wird dadurch erreicht, daß die Vorsprünge als in Umfangsrichtung des Maschinenenzylinders ausgerichtete Külrippen ausgebildet sind.

Zur Verwirbelung der Kühlluft innerhalb des Kühlkanals ist vorgesehen, daß die Kühlrippen in Umfangsrichtung versetzt angeordnet sind.

Die Reihung der Keramiksteine zu Ringbändern und die Anpassung an den jeweigen Durchmesser des Maschinenzylinders wird dadurch erleichtert, daß die Längsseiten der Keramiksteine einerseits eine konkave und andererseits eine konvexe Wölbung aufweisen.

Zur Erhöhung der Wärmeübergangsfläche von Keramikstein zu Maschinenzylindermantel wird vorgeschlagen, daß zwei Teilflächen der Bodenseite jedes Keramiksteins eine Rinne bilden.

Eine sichere Aufspannung der Ringbänder der Keramiksteine wird dadurch erzielt, daß die Keramiksteine einen oder mehrere Kanäle für Spannbänder aufweisen.

Ausführungsbeispiele werden anhand der Zeichnungen erläutert, in denen darstellen:
Fig. 1 eine perspektivische Ansicht eines ersten Ausführungsbeispiels eines Keramiksteins,
Fig. 2 ein zweites Ausführungsbeispiel des Keramiksteins,
Fig. 3 ein drittes Ausführungsbeispiel des Keramiksteins,
Fig. 4 einen Radialschnitt durch die Vorrichtung auf einem Maschinenzylindermantel und
Fig. 5 ein viertes Ausführungsbeispiel eines Keramiksteins.

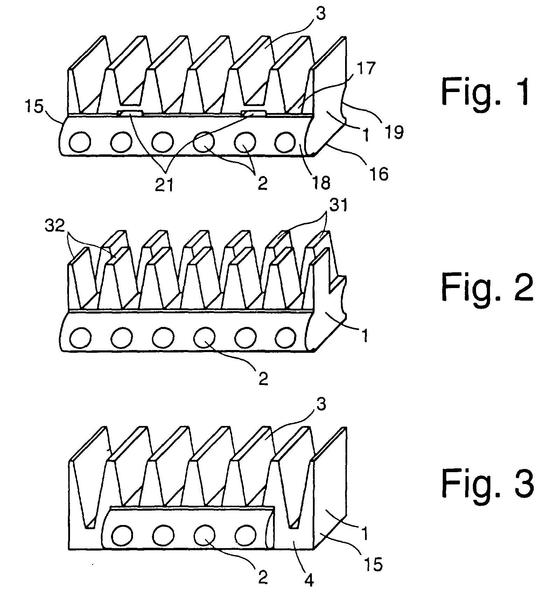

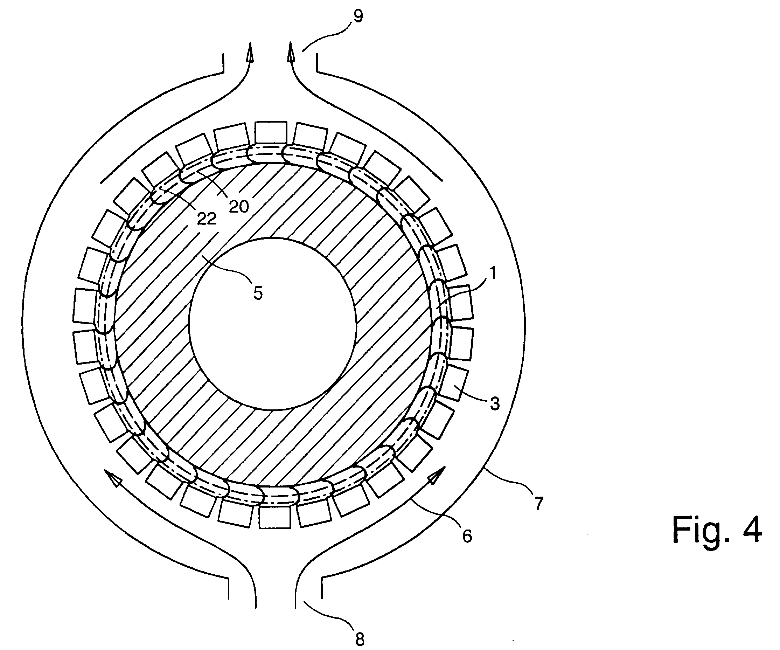

Der Keramikstein 1 nach Fig. 1 umfaßt einen im Wesentlichen quaderförmigen Grundkörper 15, dessen ebene Bodenseite 16 mit ihren Längskanten in Axialrichtung des Maschinenzylinders 5 ausgerichtet ist, vergleiche Fig. 4, und von dessen Kopfseite 17 Vorsprünge in Form von Kühlrippen 3 abstehen, die im Einbauzustand nach Fig. 4 in Umfangsrichtung des Maschinenzylinders 5 ausgerichtet sind. Die senkrecht zur Umfangsrichtung des Maschinenzylinders 5 ausgerichteten Längsseiten 18 und 19 sind konkav bzw. konvex geformt, so daß die Keramiksteine 1 im Einbauzustand nach Fig. 4 ineinandergreifen und an unterschiedliche Krümmungen der Umfangslinie bzw. an unterschiedliche Durchmesser des Maschinenzylinders anpaßbar sind.

Der Grundkörper 15 enthält in Umfangsrichtung ausgerichtete Kanäle 2 für Heizbänder 20, Fig. 4, und Kanäle 21 für Spannbänder 22. Die Keramiksteine 1 sind nach Fig. 4 zu einem Ringband zusammengefügt. Die Heizbänder 20 sind als schraubenförmige Heizdrähte oder in anderer Form ausgebildet und reichen in Umfangsrichtung des Maschinenzylinders durch die Keramiksteine des Ringbandes. Die Anzahl und Auslegung der Heizbänder erfolgt nach der geforderten Heizleistung. Die Spannbänder 22 sind Bänder in engerem Sinne, Drähte, Seile, Geflechte oder dergleichen und bestehen aus einem wärmebeständigen Stoff. Die Spannbänder sind durch nicht dargestellte Spannelemente in Umfangsrichtung zusammengehalten.

Die Keramiksteine 1 werden zu einem Ringband zusammengefügt und nach Fig. 4 um den Mantel eines Maschinenzylinders 5 gelegt. Eine versetzte Anordnung der Keramiksteine ist für breite Bänder geeignet. Die konkave bzw. konvexe Krümmung der Längsseiten 18, 19 ermöglicht eine Anpassung des Ringbandes an unterschiedliche Durchmesser des Maschinenzylinders. Die Ringbänder können in den verschiedenen axialen Zonen des Maschinenzylinders unterschiedlich angeordnet sein, in Form einzelner Ringbänder, Pakete von Ringbändern, mit abgestufter Anzahl der Kanäle mit Heizbändern und dergleichen. Die hohe Wärmeleitfähigkeit der Keramiksteine sichert eine gleichmäßige Erwärmung und damit einen gleichmäßigen Wärmeübergang. Dieses stellt auch eine gleichmäßige Wärmeabfuhr in einer Kühl-phase sicher.

Die Ringbänder der Keramikkörper haben eine geringe radiale Bauhöhe, weil der Grundkörper der Keramiksteine sehr kompakt ausgebildet ist. Infolge der hohen Wärmeleitfähigkeit sind Kühlkanäle oder Kühlausnehmungen nicht erforderlich. Metallamellen oder Metallzwischenschichten sind ebenfalls nicht erforderlich.

Die Ringbänder sind von einem Zylindermantel 7 umschlossen, der zwischen einem an ein Gebläse angeschlossenen Einlaß 8 und einem Auslaß 9 einen Kühlkanal 6 für die Kühlluft umschließt. In diesen Kühlkanal 6 ragen die beschriebenen Kühlrippen 3 hinein.

Bei dem Keramikstein nach Fig. 2 sind die Kühlrippen 31, 32 in Umfangsrichtung des Maschinenzylinders versetzt zueinander angeordnet. Dieses bedingt eine Verwirbelung der Kühlluft und damit eine Verbesserung der Kühlung. Durch die Form und Anordnung der Kühlrippen läßt sich die Kühlleistung innerhalb weiter Grenzen beeinflussen.

Fig. 3 zeigt einen Keramikstein 1, dessen Grundkörper 15 Bereiche 4 ohne Kanäle für Heizbänder aufweist. In diesen Bereichen 4 ist der Wärmeleitungsquerschnitt nicht eingeengt, und damit die Wärmeabfuhr und die Kühlleistung erhöht.

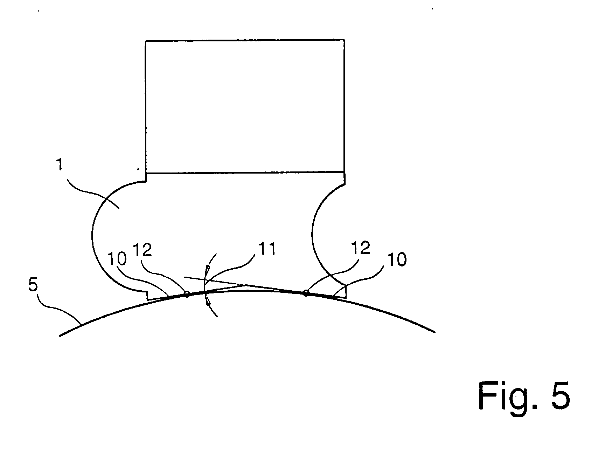

Die ebene Bodenfläche 16 der Keramiksteine 1 ergibt eine linienförmige Anlagefläche an dem Maschinenzylindermantel, was einen geringen Wärmeübergang bedeutet. Zur Vergrößerung der Anlagefläche besteht die Bodenfläche des Keramiksteins nach Fig. 5 aus zwei eine flache Rinne bildenden Teilflächen 10, die unter einem kleinen spitzen Winkel 11 angeordnet sind. Somit ergeben sich zwei linienförmige Anlageflächen 12 und damit ein vergrößerter Anlagebereich und ein erhöhter Wärmeübergang.

Die Größe des Winkels 11 hängt von der Breite des Keramiksteins in Umfangsrichtung und von dem maxiamlen zu berücksichtigenden Durchmesser des Maschinenzylinders ab. Für den maximalen Durchmesser des Maschinenzylinders liegt der Keramikstein jeweils mit den äußeren Endrändern der Teilflächen 10 an dem Maschinenzylindermantel an. Für kleinere Maschinenzylinderdurchmesser rücken die Anlagelinien zur Mitte des Keramiksteins aufeinander zu.

## Patentansprüche

1. Vorrichtung zum Heizen und Kühlen von Maschinenzylindern zur Kunststoffverarbeitung, wobei zu Ringbändern zusammengefügte Keramiksteine auf dem Maschinenzylindermantel aufliegend angeordnet sind, wobei in Umfangsrichtung miteinander fluchtende Kanäle der Keramiksteine Heizbänder aufnehmen und wobei ein Zylindermantel die Keramiksteine umgreift und Kühlkanäle umschließt, dadurch gekennzeichnet, daß die Keramik der Keramiksteine eine Wärmebeständigkeit von mehr als 200 °C, einen spezifischen Durchgangswiderstand von mehr als 10⁶ Ωcm und eine Wärmeleitfähigkeit größer als 10 W/mK hat und daß auf der von dem Maschinenzylindermantel abgewandten Seite der Keramiksteine in den Kühlkanal hineinragende Vorsprünge angeordnet sind.

2. Vorrichtung nach Anspruch 1, dadurch gekennzeichnet, daß die Keramik Aluminiumoxid (Al₂O₃), Aluminiumnitrid (AlN), Aluminiumtitanat (Al₂O₃TiO₂) und/oder Siliciumnitrid (SN) umfaßt.

3. Vorrichtung nach Anspruch 1 oder 2, dadurch gekennzeichnet, daß die Vorsprünge als in Umfangsrichtung des Maschinenenzylinders ausgerichtete Kühlrippen (3) ausgebildet sind.

4. Vorrichtung nach Anspruch 3, dadurch gekennzeichnet, daß die Kühlrippen (3) in Umfangsrichtung versetzt angeordnet sind.

5. Vorrichtung nach einem der Ansprüche 1 bis 4, dadurch gekennzeichnet, daß die Längsseiten (18, 19) der Keramiksteine (1) einerseits eine konkave und andererseits eine konvexe Wölbung aufweisen.

6. Vorrichtung nach einem der Ansprüche 1 bis 5, dadurch gekennzeichnet, daß zwei Teilflächen (10) der Bodenseite (16) jedes Keramiksteins (1) eine Rinne bilden.

7. Vorrichtung nach einem der Ansprüche 1 bis 6, dadurch gekennzeichnet, daß die Keramiksteine (1) einen oder mehrere Kanäle (21) für Spannbänder (22) aufweisen.
